# FASCICULE DE BREVET EUROPEEN

(11) **EP 0 475 796 B1**
(45) Date de publication et mention de la délivrance du brevet: **21.06.1995**
(21) Numéro de dépôt: 91402173.8
(22) Date de dépôt: 02.08.1991
(51) Int. Cl.: G02B 27/28, H04N 9/31

(54) **Dispositif de projection d'images utilisant deux composantes orthogonales de polarisation de la lumière**
Bildprojektionssystem mit Verwendung von zwei orthogonalen Lichtpolarizationskomponenten
Image projection system using two orthogonal light polarization components

(30) Priorité: 10.08.1990 FR 9010251
(43) Date de publication de la demande: 18.03.1992
(73) Titulaire: THOMSON-CSF, 75008 Paris (FR)
(72) Inventeur: Nicolas, Christophe, F-92045 Paris la Défense (FR); Loiseaux, Brigitte, F-92045 Paris la Défense (FR); Huignard, Jean-Pierre, F-92045 Paris la Défense (FR); Puech, Claude, F-92045 Paris la Défense (FR)
(74) Mandataire: Guérin, Michel

(56) Documents cités:
- EP-A- 0 083 090
- EP-A- 0 361 559
- EP-A- 0 364 039
- US-A- 2 449 287

## Description

L'invention concerne un dispositif de projection permettant de former une image sur un écran éloigné avec un fort rendement lumineux, grâce à l'utilisation des deux composantes orthogonales de polarisation de la lumière.

Dans les projecteurs d'images, l'image projetée sur un écran résulte d'une modulation spatiale de la lumière. La lumière produite par une source est guidée jusqu'à un ensemble de modulations de lumière regroupant les moyens nécessaires à réaliser la modulation spatiale de la lumière. Il est courant d'utiliser en tant que modulateur spatial de lumière, un écran à cristaux liquides (en abrégé "écran LCD", de l'anglais "Liquid Crystal Display") comprenant un réseau matriciel de cellules élémentaires à cristaux liquides commandées à partir d'un signal vidéo, chaque cellule représentant un point élémentaire d'image. L'écran LCD est alors appelé également "valve optique" ou encore "diapositive électronique".

Les cellules à cristaux liquides sont généralement du type "nématique en hélice", l'hélice étant à 90°. Ces cellules à cristaux liquides sont les plus connues, et sont généralement utilisées dans une technologie de transistors en couches minces permettant leur adressage par un signal vidéo ; c'est-à-dire chaque cellule est commandée par l'intermédiaire d'un élément de commutation ou "TFT"(de l'anglais Thin film transistor).

Chaque cellule élémentaire de l'écran LCD possède, à l'état de repos, un pouvoir rotatoire (de 90°) pour deux directions orthogonales de polarisation de la lumière qui la traverse. Lorsqu'une cellule élémentaire est activée, c'est-à-dire lorsque le champ électrique appliqué à une cellule augmente, sous l'effet du signal vidéo par exemple, le pouvoir rotatoire disparaît progressivement. Des angles de rotation compris entre 0 et 90° peuvent être obtenus en faisant varier continûment le signal appliqué au "TFT" c'est-à-dire à la cellule élémentaire à cristaux liquides.

Basé sur ce principe, le fonctionnement d'un projecteur d'images classique utilisant un modulateur spatial tel qu'un écran LCD, exige de sélectionner une direction de polarisation pour l'éclairage de l'écran LCD, de telle sorte que la polarisation complémentaire n'est pas utilisée. Pour ne conserver qu'une unique direction de polarisation, la lumière passe par un polariseur avant d'éclairer l'écran LCD.

Après passage dans l'écran LCD, la lumière peut à nouveau comporter les deux types complémentaires de polarisation selon une distribution spatiale qui est fonction des cellules et du degré de leur activation. La visualisation de l'état de chaque cellule de l'écran LCD est obtenue en faisant passer la lumière émergeant de l'écran LCD, dans un moyen d'analyse de la polarisation, un polariseur par exemple.

La méthode ci-dessus expliquée est la plus couramment employée (voir par exemple EP-A-0 361 559), du fait qu'elle est la moins complexe à mettre en oeuvre. Mais elle présente comme inconvénient important de conduire à une faible efficacité lumineuse. En effet, l'élimination de l'une des composantes de lumière de polarisation donnée conduit directement à perdre au moins 50 % de l'énergie lumineuse, plus l'absorption par le polariseur et l'analyseur de la lumière ayant la direction de polarisation utile.

L'invention concerne les projecteurs de lumière et plus particulièrement les ensembles de modulation de la lumière.

L'invention propose d'augmenter l'efficacité lumineuse en utilisant les deux composantes complémentaires de polarisation, par un moyen qui procure un gain d'au moins un facteur 2 en énergie lumineuse, allant même pratiquement jusqu'à un facteur 3. Elle propose en outre un agencement des ensembles de modulation de la lumière qui permet notamment de constituer un projecteur couleur d'une grande compacité.

L'invention propose un projecteur d'images en couleurs tel que défini dans la revendication 1.

L'invention sera mieux comprise et d'autres avantages qu'elle présente apparaîtront à la lecture de la description qui suit, faite à titre d'exemple non limitatif en référence aux figures annexées, parmi lesquelles :
- les figures 1a et 1b illustrent schématiquement l'agencement et le fonctionnement d'un projecteur d'images,
- la figure 2 montre ce projecteur avec l'adjonction d'un système optique afocal ;
- la figure 3 illustre schématiquement l'application de l'invention au cas des polarisations circulaires de la lumière ;
- la figure 4 montre schématiquement une structure compacte d'un ensemble de modulation ;
- la figure 5 montre schématiquement un projecteur d'images utilisant plusieurs ensembles de modulation conformes à l'invention ;
- la figure 6 est une vue qui permet de localiser en trois dimensions les positions respectives des éléments montrés à la figure 5 ;
- les figures 7a, 7b, 7c montrent en perspective des surfaces séparatrices de polarisation contenues dans un cube montré à la figure 6 ;
- les figures 8a à 8c montrent en perspective des pyramides élémentaires formant un cube des figures 7a, 7b, 7c.

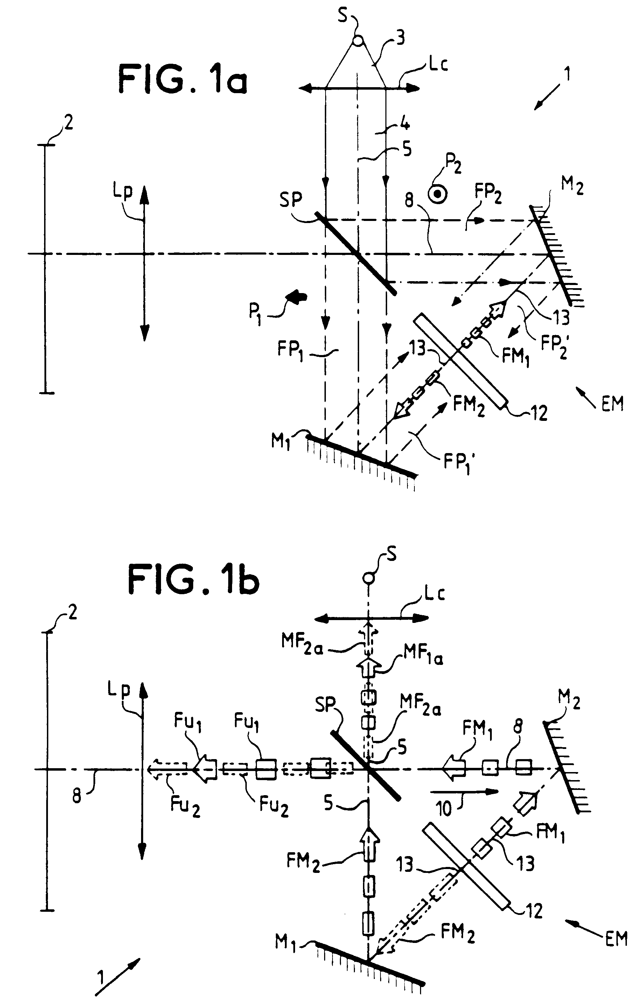

La figure 1a représente schématiquement, à titre d'exemple non limitatif, un projecteur d'images 1.

Le projecteur d'images 1 comporte une source lumineuse S produisant une lumière 3 n'ayant aucun état particulier de polarisation. La lumière 3 est destinée à être modulée spatialement par un modulateur spatial 12 de lumière appartenant à un ensemble modulateur de lumière EM, en vue de former une image à projeter sur un écran de protection 2, à l'aide d'un objectif de projection LP. L'objectif de projection LP peut comporter éventuellement un ensemble de lentilles et il permet de conjuguer optiquement le modulateur spatial 12 de lumière et l'écran de projection 2. La lumière 3 est captée par une lentille collimatrice LC qui délivre un faisceau de lumière 4 ayant des rayons parallèles se propageant selon un premier axe optique 5. Le faisceau de lumière 4 se propage en direction de l'ensemble de modulation EM. L'ensemble de modulation EM comporte une surface SP séparatrice de polarisation.

Le faisceau de lumière 4 est incident sur la surface SP séparatrice de polarisation, et cette dernière produit un premier et un second faisceaux polarisés FP1, FP2 qui forment entre eux un angle de 90°.

Le premier faisceau polarisé FP1 est un faisceau transmis qui, ayant traversé la surface SP séparatrice, se propage suivant le premier axe optique 5 vers un premier miroir M1.

La lumière qui constitue ce premier faisceau polarisé FP1 comporte une première direction de polarisation P1 parallèle au plan d'incidence (le plan d'incidence étant le plan défini par le rayon incident et la normale à la surface SP séparatrice).

Le second faisceau polarisé FP2 est un faisceau réfléchi par la surface séparatrice SP suivant un second axe optique 8 formant un angle de 90° avec le premier axe 5, et se propageant en direction d'un second miroir M2. La direction de polarisation P2 du second faisceau FP1 polarisé est orthogonale à celle du premier faisceau polarisé FP1, c'est-à-dire qu'elle est perpendiculaire au plan d'incidence.

Suivant une caractéristique de l'invention, les deux faisceaux polarisés FP1, FP2 sont superposés dans l'espace avec des directions de propagation opposées, afin d'être modulés spatialement simultanément par le même modulateur spatial 12 de lumière.

A cette fin, les plans des miroirs M1, M2 sont orientés de manière à réfléchir, respectivement le premier et le second faisceaux primaires FP1, FP2 sur un même troisième axe optique 13.

Ainsi les premier et second faisceaux polarisés FP1, FP2, incidents respectivement sur le premier et le second miroirs M1, M2 constituent des premier et second faisceaux polarisés réfléchis FP1′, FP2′ ayant tous les deux pour axe, le troisième axe optique 13. Le premier faisceau polarisé réfléchi FP1′ se propage vers le second miroir M2 et le second faisceau polarisé réfléchi FP2′ se propage en sens contraire vers le premier miroir M1.

D'autre part, le modulateur spatial de lumière 12 est lui-même situé sur le troisième axe optique 13.

Le modulateur spatial de lumière 12 est constitué par exemple par un écran LCD en lui-même classique, comportant une pluralité de cellules élémentaires à cristaux liquides (non représentées) formant un réseau matriciel ; l'écran LCD 12 est commandé par exemple de manière traditionnelle (non représentée) par des signaux vidéo.

L'écran LCD 12 est disposé sur le troisième axe optique 13 de manière que chaque rayon de l'un des faisceaux FP1', FP2' ayant l'une des polarisations P1, P2, soit modulé par une même cellule élémentaire à cristaux liquides qu'un rayon de l'autre faisceau ayant l'autre polarisation et qui à l'origine appartenait à une même section élémentaire du front d'onde de lumière produite par la source lumineuse 2. Dans l'exemple non limitatif décrit, les miroirs M1, M2 sont disposés de façon symétrique par rapport à la surface S séparatrice de polarisation, et l'écran LCD 12 est disposé dans un même plan que cette surface S séparatrice.

L'orientation des miroirs Ml, M2 ayant permis de superposer les premier et second faisceaux polarisés FP1′, FP2′, ceux-ci passent tous deux par l'écran LCD 12 ou modulateur spatial 12 d'où ils émergent avec des directions opposées et constituent respectivement un premier et un second faisceaux modulés FM1, FM2.

Les premier et second faisceaux modulés FM1, FM2 sont symbolisés par une succession de carrés pour le premier faisceau modulé FM1, et par une succession de rectangles pour le second faisceau modulé FM2. Pour ne pas nuire à la clarté de la figure 1a, la suite des explications sur le fonctionnement du projecteur est donnée en référence à la figure 1b.

La figure 1b représente le projecteur d'images avec les mêmes éléments que sur la figure 1, disposés d'une même manière et sur les mêmes axes.

En émergeant du modulateur spatial 12, les premier et second faisceaux modulés FM1, FM2 se propagent suivant le troisième axe optique 13, respectivement vers le second miroir M2 et vers le premier miroir M1 ; ils sont réfléchis par ces miroirs M1, M2 de telle manière qu'ils sont tous les deux incidents sur la surface SP séparatrice de polarisation, au même point qui avait séparé les premier et second faisceaux polarisés FP1, FP2 (montrés sur la figure 1a).

Deux cas principaux peuvent se présenter :

Premier cas : les faisceaux modulés FM1, FM2 sont passés dans l'écran LCD 12 à travers des cellules au "repos" c'est-à-dire non activées. Dans ce cas, pour chaque faisceau la direction de polarisation a subi une rotation de 90° durant la traversée de la cellule : par suite, le premier faisceau modulé FM1 est du type ayant la seconde direction de polarisation P2, et le second faisceau modulé FM2 est du type ayant la première direction de polarisation P1.

Compte-tenu de sa direction de polarisation, le premier faisceau modulé FM1 est réfléchi par la surface SP séparatrice et il constitue un faisceau FM1a non utile à l'image et qui se propage suivant le premier axe optique 5 en direction de la source lumineuse.

Le second faisceau modulé FM2, ayant la première direction de polarisation P1, traverse la surface SP séparatrice et constitue un faisceau FM2a qui lui aussi se propage en direction de la source lumineuse S et qui est superposé au faisceau modulé FM1a. Ainsi dans le premier cas, ces deux faisceaux émergent (de la surface séparatrice SP) superposés et dirigés vers la source lumineuse S.

Deuxième cas : les faisceaux modulés FM1, FM2 sont passés dans l'écran LCD 12 en traversant une ou des cellules activées. Dans ce cas le cristal liquide a perdu son pouvoir rotatoire sur les rayons qui passent par ce point élémentaire d'image, et chaque direction de polarisation est conservée, c'est-à-dire que dans ce cas les premier et second faisceaux modulés FM1, FM2 comportent respectivement la première et la seconde direction de polarisation P1, P2. En conséquence d'une part, le premier faisceau modulé FM1 traverse sans être dévié la surface séparatrice SP ; il constitue un premier faisceau utile FU1 qui se propage en direction de l'objectif de projection LP, suivant le second axe 8 sur lequel sont centrés, le second miroir M2, la surface séparatrice SP de polarisation, l'objectif de projection LP et l'écran de projection 2. D'autre part, le second faisceau modulé FM2 est réfléchi par la surface séparatrice SP ; il constitue un second faisceau utile FU2 qui se propage lui aussi suivant le second axe optique 8 en direction de l'objectif de projection LP. Ainsi dans le second cas, les deux faisceaux utiles FU1 et FU2 émergent (de la surface séparatrice SP) superposés et dirigés vers l'utilisation que représente l'objectif de projection LP, c'est-à-dire dirigés à 90° par rapport au cas précédent.

Dans ces conditions, on voit qu'à un point élémentaire d'image au repos de l'écran LCD 12, ou autrement dit qu'à une cellule à cristaux liquides de ce dernier au repos, correspondra sur l'écran de projection 2 un point noir, tandis qu'un point élémentaire activé correspondra à un point blanc. Si un point élémentaire d'image se trouve dans un état intermédiaire entre les pouvoirs rotatoires 0 et 90°, on obtient un niveau de gris d'autant plus foncé que le pouvoir rotatoire est important.

Une image positive est donc projetée sur l'écran formée par les deux faisceaux utiles FU1, FU2 c'est-à-dire à l'aide des deux composantes complémentaires de polarisation ; tandis que les faisceaux non utiles MF1a, MF2a forment une image négative et sont renvoyés vers la source lumineuse S1. L'énergie des deux faisceaux MF1a et MF2a s'additionne à celle de la source lumineuse S et elle est utilisée à nouveau pour l'éclairage du modulateur spatial 12.

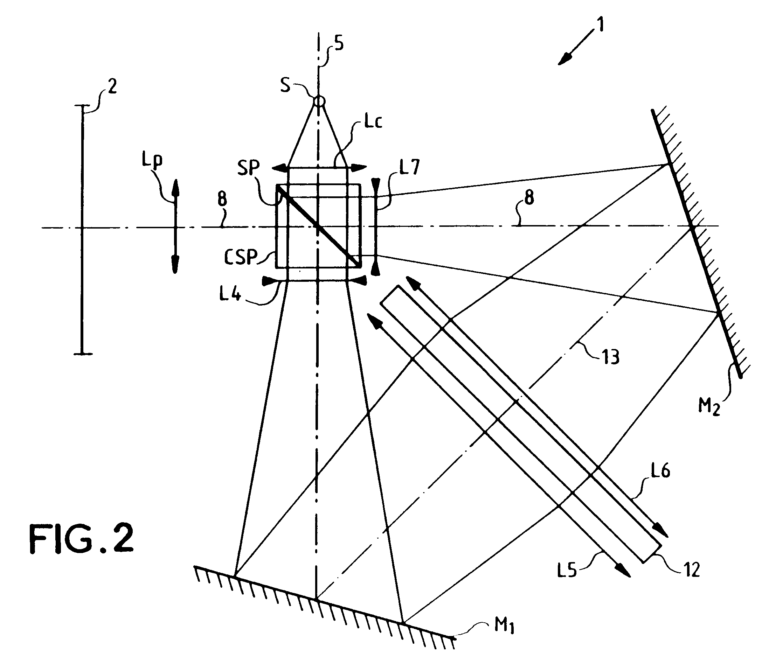

Les différents éléments cités en référence aux figures 1 et 2 sont en eux-mêmes classiques. Suivant une caractéristique de l'invention, la surface séparatrice SP de polarisation est réalisée par un empilement de films en couches minces de matériaux diélectriques de manière à faire alterner différents indices de réfraction, d'une façon en elle-même conventionnelle.

Dans une maquette de validation, la surface de séparation SP était constituée à l'aide d'un cube séparateur de polarisation comportant un empilement de couches minces tel que ci-dessus mentionné, ce cube séparateur étant d'un type couramment disponible dans le commerce, tel que par exemple celui ayant 38 mm de côté et qui est commercialisé par la firme MELLES GRIOT avec la référence 03 PBS 049 ; le modulateur spatial de lumière étant un écran LCD à matrice active (avec TFT), formé par 250.000 cellules à cristaux liquides dans des dimensions de 600 mm x 600 mm.

Dans l'ensemble de modulation de lumière EM, les chemins optiques définissent une forme triangulaire : un premier côté est formé entre la surface séparatrice SP de polarisation et le premier miroir M1 ; un second côté est formé entre cette surface séparatrice SP et le second miroir M2 ; le troisième côté est constitué entre les deux miroirs M1,M2 entre lesquels est disposé l'écran LCD 12. Dans cette structure triangulaire, l'écran LCD 12 étant disposé dans un même plan que la surface séparatrice SP, les chemins optiques entre cette dernière et l'écran LCD 12 ont une même longueur en passant par le premier miroir M1 ou bien par le second miroir M2. A cette longueur de chemin optique il faut ajouter la distance entre l'objectif de projection LP et la surface séparatrice SP, pour obtenir la distance de trajet optique entre l'objectif de projection LP et l'écran LCD 12 ou écran modulateur spatial.

Il est connu que dans tout système de projection d'image, cette distance de trajet optique entre l'objectif de projection et l'écran modulateur spatial doit être la plus faible possible, afin de minimiser l'ouverture de l'objectif de projection. On remarque cependant que dans l'ensemble de modulation EM, pour une dimension donnée d'écran LCD 12 et pour une dimension donnée de surface séparatrice, sa structure triangulaire impose une distance de trajet optique minima à respecter entre l'objectif de projection et l'écran LCD 12.

La figure 2 représente un agencement utilisant un système optique afocal, en vue notamment de diminuer l'encombrement et le coût des dispositifs servant à former la surface séparatrice SP de polarisation, particulièrement quand cette dernière est à large bande passante spectrale et quand on veut utiliser un écran LCD de grande surface.

On trouve une même disposition relative des éléments déjà montrés aux figures 1a et 1b.

Dans la version de projecteur montrée à la figure 2, l'écran LCD 12 comporte des dimensions largement plus grandes que celles de la surface de séparation SP qui est formée dans un cube séparateur de polarisation CSP. A cette fin comme représenté à la figure 2, le projecteur d'image 1 comporte en outre : une lentille additionnelle divergente L4 située à proximité de la surface séparatrice SP ; une lentille additionnelle convergente L5 située à proximité de l'écran LCD 12 entre ce dernier et le premier miroir M1 ; une seconde lentille additionnelle convergente L6 située à proximité de l'écran LCD 12 entre ce dernier et le second miroir M2 ; une seconde lentille divergente L7 située à proximité de la surface séparatrice SP de polarisation entre cette dernière et le second miroir M2. Il est ainsi possible, comme illustré par la figure 2, de rendre les faisceaux divergents avant qu'ils n'atteignent l'écran LCD 12 ou valve optique, puis convergents ensuite pour leur retour vers la surface séparatrice SP.

Les lentilles additionnelles L4, L5, L6, L7 peuvent être des lentilles dites de Fresnel ou bien même des lentilles holographiques collées au cube CSP et à l'écran LCD 12.

Dans le cas où la source S présente une dimension angulaire non nulle vue du cube CSP, les lentilles divergentes L4 et L7 peuvent être omises. Les lentilles L5 et L6 font alors office de lentille de champ. L'ensemble L5-L6 forme une image du condenseur LC superposée avec LC lui-même et, symétriquement, une image de LC superposée à la pupille de sortie du système, soit en général l'emplacement de l'objectif de projection LP.

Les exemples qui précèdent sont donnés pour des polarisations linéaires, mais l'agencement de l'invention peut s'appliquer aussi au cas des polarisations circulaires, par exemple en utilisant une cellule de cristaux liquides de type cholestérique, fonctionnant comme réflecteur de Bragg pour une polarisation circulaire donnée et pour une longueur d'onde donnée du faisceau incident.

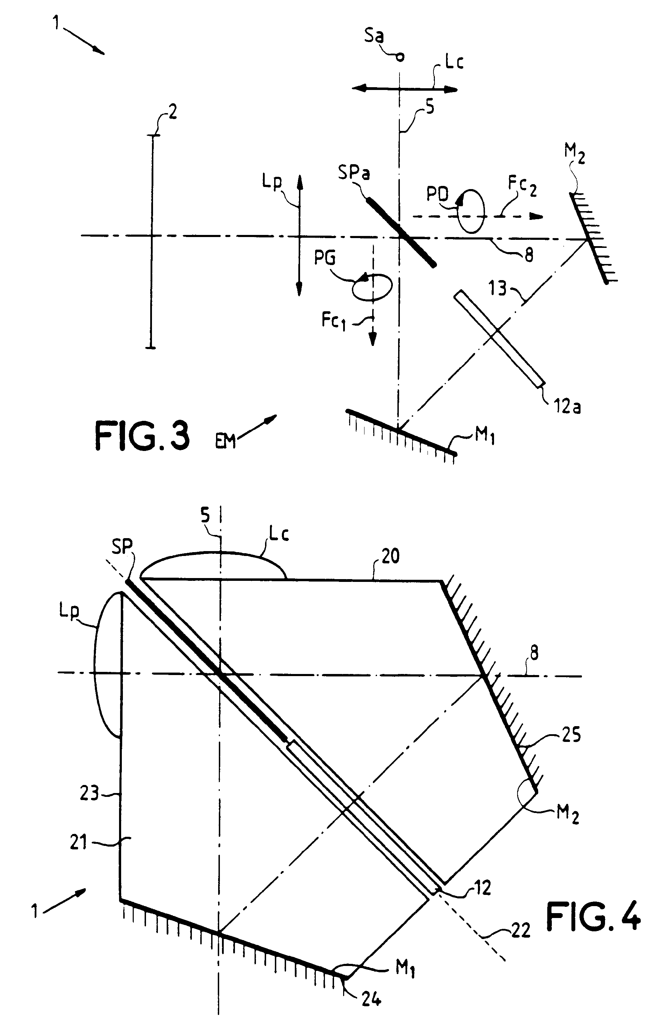

La figure 3 illustre schématiquement à titre d'exemple non limitatif, une application au cas des polarisations circulaires.

La disposition des éléments est semblable à celle des figures 1 et 2, mais dans cette application la surface séparatrice SPa de polarisation est formée par une cellule de cristaux liquides de type cholestérique ; elle est constituée de façon en elle-même classique, par exemple à l'aide de deux lames de verre entre lesquelles est contenu le cristal liquide.

La lumière se propage suivant le premier axe optique 5 vers la surface séparatrice SPa de polarisation qui, dans l'exemple non limitatif décrit, d'une part transmet un faisceau polarisé FC1 (symbolisé par une flèche en traits pointillés) comportant la polarisation circulaire gauche PG ; et, d'autre part, réfléchit un faisceau polarisé FC2 ayant la polarisation circulaire droite PD. Ces deux faisceaux ayant les deux polarisations complémentaires sont ensuite réfléchis par les premier et second miroirs M1, M2 et éclairent tous les deux le modulateur spatial de lumière 12a. Ce dernier est un écran LCD dont les cellules peuvent être calculées (de façon en elle-même traditionnelle, notamment quant à l'épaisseur et aux indices de réfraction) pour que, au repos elles inversent le sens de chaque polarisation circulaire, pour une longueur d'onde correspondant à celle pour laquelle agit la surface séparatrice SPa. Par contre, quand les cellules de l'écran LCD 12a sont activées, la biréfringence disparaît et le sens de rotation est conservé.

Ensuite la superposition de faisceaux vers l'objectif de projection LP et/ou vers la source Sa suit les mêmes règles que dans le cas des polarisations linéaires.

La figure 4 montre schématiquement à titre d'exemple non limitatif, une structure compacte et compatible avec des impératifs de production industrielle, structure dans laquelle sont contenus les éléments cités dans les exemples précédents à l'exception bien entendu de la source de lumière et de l'écran de projection.

Le dispositif de projection 1 comporte deux blocs symétriques 20, 21, d'un matériau transparent (par exemple en verre ou en plastique moulé), disposés en vis-à-vis et entre lesquels sont intercalés, d'une part, les couches minces diélectriques qui forment la surface séparatrice SP de polarisation, et d'autre part, l'écran LCD 12.

Chaque bloc de verre 20, 21 comporte une lentille sur une de ces faces 23 : le premier bloc 20 porte la lentille collimatrice LC et le second bloc 21 porte la lentille de projection LP. L'ensemble formé par les deux blocs 20, 21 comporte, d'une part à l'opposé de la lentille collimatrice LC, une première face inclinée 24 (formée sur le second bloc 21) métallisée de manière à constituer le premier miroir M1 ; et d'autre part, à l'opposé de la lentille de projection LP, une seconde face inclinée 25 (formée sur le premier bloc 20) métallisée de manière à constituer le second miroir M2. Cette disposition permet de constituer le premier et le second axes optiques 5,8. Ces deux axes se croisent au niveau de la surface séparatrice SP qui, avec l'écran LCD 12, est située dans un plan de symétrie 22 (symbolisé par une ligne en traits pointillés) de l'ensemble ; le troisième axe optique 13 étant perpendiculaire audit plan de symétrie comme dans les exemples précédents.

L'un des avantages d'une telle disposition est que, si les deux blocs transparent de verre 20, 21 sont rigoureusement identiques, le positionnement relatif de ces deux pièces assure le réglage nécessaire à la superposition des faisceaux. Il offre en outre l'avantage d'une bonne reproductibilité et d'une bonne stabilité thermique.

L'ensemble de modulation de lumière de l'invention, permettant de superposer les deux faisceaux de polarisation complémentaires comme décrit en référence aux figures 1 à 5, est compatible directement pour des images monochromes, mais il est compatible aussi avec différentes méthodes connues utilisées pour projeter des images en couleurs.

L'une de ces méthodes peut consister à doter le modulateur spatial de lumière 12 d'un filtre coloré rouge, vert ou bleu pour chaque point élémentaire d'image : un groupe de trois points élémentaires ou pixels consécutifs possède les trois couleurs. Le codage du signal vidéo assure le dosage relatif de ces trois couleurs dans chaque groupe de trois pixels. Dans ce cas on peut utiliser une source de lumière blanche, et un cube CSP du type à large bande pour la séparation des polarisations complémentaires. L'inconvénient de cette technique est qu'elle divise par trois la résolution de l'image, comparé au fonctionnement monochrome.

Une autre méthode connue pour former une image couleur consiste à utiliser trois valves optiques, c'est-à-dire trois écrans LCD au lieu d'un seul, et de superposer les images projetées. Chacun des trois écrans LCD est éclairé par une seule des couleurs primaires, bleu, rouge et vert. Il est avantageux de n'avoir qu'une seule optique de projection sur l'écran de projection, afin notamment de pouvoir faire varier aisément le grandissement de l'image.

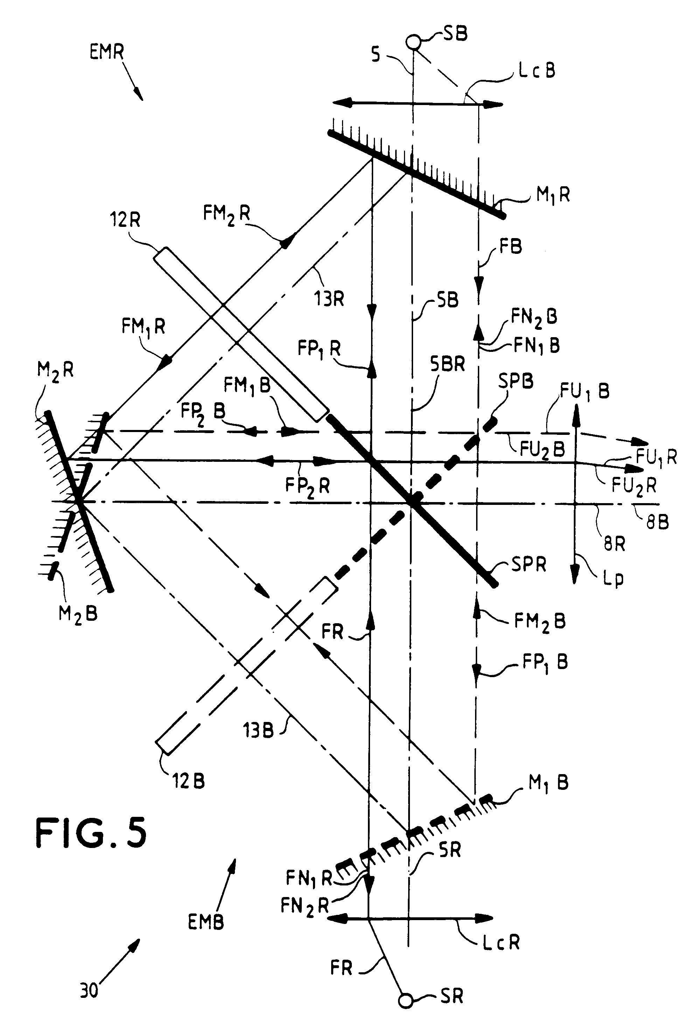

Dans cet esprit, il est proposé de disposer plusieurs ensembles de modulation, associés chacun par exemple à une source lumineuse, chaque source étant d'une couleur différente, pour aboutir à un projecteur couleur d'une grande compacité. Ceci est obtenu en mettant à profit la structure de forme triangulaire que présentent les chemins optiques dans un ensemble de modulation EM de lumière,
afin de grouper deux, trois ou plus ensembles de modulation, en leur conférant des axes communs comme il apparaît à la figure 5, tout en conservant aussi faible que possible la distance de trajet optique entre l'objectif de projection et les écrans LCD.

La figure 5 montre schématiquement un projecteur couleur 30 comportant au moins deux ensembles de modulation de lumière, EMB, EMR, qui sont imbriqués de manière à comporter deux axes communs. Chaque ensemble de modulation est associé à une source lumineuse SB, SR, les deux sources produisant une lumière de couleur différente, par exemple bleue pour la première source SB associée au premier ensemble de modulation EMB, et rouge pour la seconde source SR associée au second ensemble de modulation EMR.

Chaque ensemble de modulation est semblable à celui montré aux figures 1a, 1b et ses éléments comportent les mêmes repères suivis de la lettre B ou R suivant qu'ils appartiennent à l'ensemble affecté à la lumière bleue ou à la lumière rouge.

La lumière bleue produite par la source bleue SB passe par une lentille de collimation LCB qui en fait un faisceau FB, se propageant sur le premier axe optique 5B en direction d'une surface séparatrice de polarisation SPB. Cette dernière engendre un premier et un second faisceaux polarisés (de couleur bleue) FP1B et FP2B qui se propagent respectivement sur le premier axe optique 5B et sur le second axe optique destiné à former un axe de projection 8 (ces deux axes formant un angle de 90°), en direction respectivement du premier et du second miroir M1B, M2B. Ces deux faisceaux sont réfléchis par les miroirs M1B, M2B et se propagent alors sur un même troisième axe optique 13B (formant un angle de 45° avec les axes 5 et 8) avec des directions opposées, de manière à éclairer l'écran LCD 12B avec deux polarisations orthogonales et complémentaires de couleur bleue ; l'écran LCD 12B étant disposé sur le troisième axe optique 13B. Ayant traversé l'écran LCD 12B, ces faisceaux sont modulés par ce dernier et constituent des faisceaux modulés FM1B, FM2B. Ces faisceaux modulés sont réfléchis par les miroirs M2B, M1B vers la surface séparatrice SPB, d'où ils émergent comme déjà représenté à la figure 1b, soit selon des faisceaux utiles superposés de couleur bleue FU1B, FU2B (représentés sur la figure 5 par une unique flèche) qui se propagent vers la lentille de projection LP, soit selon des faisceaux non utiles ou d'imagerie négative (FN1B, FN2B représentés par une unique flèche) superposés, qui se propagent vers la source de lumière bleue SB. Ceci résume le fonctionnement déjà expliqué précédemment pour l'ensemble de modulation EM montré aux figures 1a, 1b et peut s'appliquer également au fonctionnement du second ensemble modulateur EMR affecté à la couleur rouge.

Il est à noter que les premier et second axes optiques 5,8 (ce dernier formant l'axe de projection 8) sont communs aux deux ensembles de modulation EMB et EMR, et que par conséquent les deux sources lumineuses SB et SR sont sur un même premier axe optique 5BR, à l'opposé l'une de l'autre par rapport à l'axe de projection 8. Par conséquent, le schéma optique concernant les faisceaux formés à partir de la lumière rouge produite par la source SR est symétrique de celui qui a été décrit pour la lumière bleue, par rapport à l'axe de projection 8. On peut donc trouver deux faisceaux de couleur rouges superposés, de polarisations orthogonales complémentaires P1, P2 et se propageant dans une même direction, soit selon des faisceaux FU1R, FU2R allant vers la lentille de projection LP, soit selon des faisceaux négatifs FN1R, FN2R allant vers la source lumineuse rouge SR.

Il résulte de cette disposition comme avantage, notamment que l'objectif de projection LP conjugue optiquement à la fois l'écran LCD 12B (lumière bleue) avec l'écran de projection 2 et ce dernier avec l'écran LCD 12R (lumière rouge).

Cependant les deux ensembles de modulations EMB et EMR ainsi imbriqués, du fait de leurs axes communs présentent chacun des surfaces qui doivent être inopérantes pour les faisceaux de lumière ayant la couleur affectée à l'autre ensemble.

En effet, à l'intersection de l'axe de projection 8 avec le premier axe optique 5 BR (commun au bleu et au rouge), on trouve à la fois la surface séparatrice de polarisation SPB pour la couleur bleue et la surface séparatrice SPR pour la couleur rouge, dont les plans forment entre eux un angle de 90°. Aussi suivant une caractéristique de l'invention, pour que les faisceaux d'une couleur donnée traversent pratiquement sans perte et sans modification de direction la surface séparatrice affectée à l'autre couleur, les surfaces séparatrices SPB et SPR sont réalisées chacune pour agir sélectivement, c'est-à-dire pour n'agir que pour la lumière ayant la couleur à laquelle elles correspondent. Les surfaces séparatrices SPB et SPR peuvent être constituées dans ce but par un empilement de couches minces diélectriques (non représentées) déposées sur une surface de verre, d'une manière en elle-même classique quand on veut constituer des filtres ou prismes ou des miroirs sélectifs agissant sur une gamme de longueur d'onde donnée. Egalement, en ce qui concerne les miroirs : les miroirs M1B, M2B destinés à réfléchir la lumière bleue doivent laisser passer pratiquement sans perte les faisceaux de couleur rouge, et de même pour les miroirs M1R, M2R qui doivent réfléchir les faisceaux de lumière rouge et laisser passer les faisceaux de lumière bleue. En conséquence, les miroirs M1B, M2B et M1R, M2R pour être réflecteurs uniquement pour la couleur à laquelle ils correspondent, peuvent être eux aussi réalisés par un empilement de couches minces diélectriques déposé sur une surface de verre.

Le projecteur couleur de l'invention peut comporter au moins un ensemble modulateur de lumière en plus, affecté à la troisième couleur primaire, le vert par exemple. Ce troisième ensemble pour le vert n'est pas représenté sur la figure 5, mais il a en commun avec les deux ensembles bleu et rouge EMB, EMR son second axe optique, c'est-à-dire l'axe de projection 8. En fait les trois ensembles se déduisent les uns des autres par rotation autour de cet axe de projection, d'un angle de 90° par exemple (ou n'importe quel angle tel que les trois écrans LCD ne se touchent pas). Ainsi le troisième ensemble pour la couleur verte pourrait être disposé de telle manière que, son axe de projection étant confondu avec l'axe de projection 8, son premier axe optique (axe portant la source lumineuse, la lentille collimatrice, la surface séparatrice et le premier miroir) serait perpendiculaire au plan de la figure 1.

On observe que dans le projecteur couleur 30, les ensembles de modulation EMB, EMR sont assemblés de manière telle que l'objectif de projection LP est commun à tous ces ensembles, quel que soit leur nombre, et que les distances de trajet optique entre l'objectif de projection LP et les différents écrans LCD 12B, 12R soient égales.

Un autre avantage du projecteur couleur 30 est que par rapport au projecteur monochrome comportant un écran LCD12 unique décrit dans la figure 1, on conserve la distance minima D apportée par la structure triangulaire, entre l'objectif de projection et chaque écran LCD. On note qu'on a aussi la possibilité dans une structure à plusieurs écrans LCD d'introduire des lentilles de champ tel qu'il est décrit dans la figure 2.

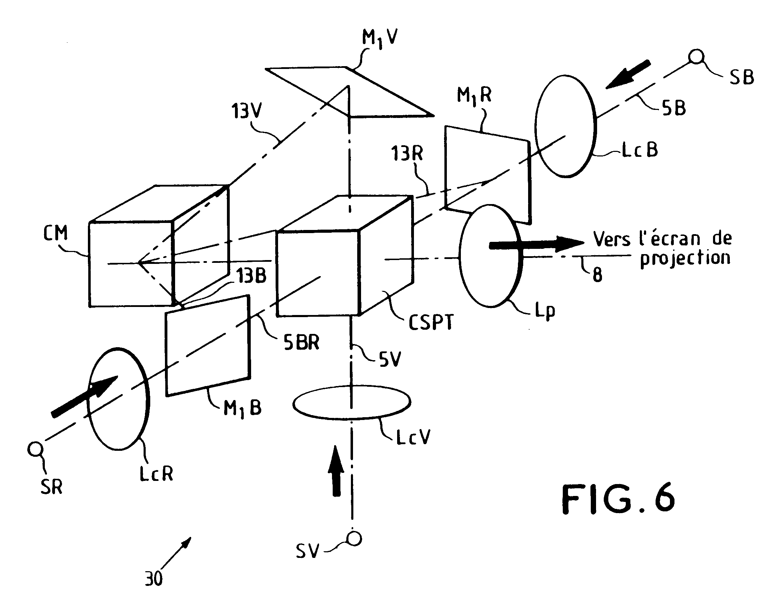

La figure 6 est une vue en perspective qui permet de mieux repérer l'emplacement des éléments d'un projecteur couleur 30 du type montré à la figure 5, et comprenant trois ensembles de modulation affectés chacun à une couleur différente par exemple respectivement bleue, rouge et verte B, R, V.

Le projecteur couleur 30 comporte un axe de projection 8 commun aux trois couleurs, formé des trois seconds axes optiques 8B, 8R, 8V. Il comporte trois surfaces séparatrices de polarisation SPB, SPR, SPV (non montrées sur la figure) de type sélectif en longueur d'onde, et selon une caractéristique de l'invention, ces trois surfaces séparatrices sont toutes contenues dans un même cube triple séparateur de polarisation CSPT. Il comporte en outre trois surfaces réfléchissantes de type sélectif en longueur d'onde formant chacune un second miroir M2B, M2R, M2V, et selon une caractéristique de l'invention ces trois second miroirs sont contenus dans un même cube miroir CM. Une source lumineuse bleue SB et une source lumineuse rouge SR sont disposées sur un même premier axe optique 5BR, à l'opposé l'une de l'autre par rapport à l'axe de projection 8. Le cube triple séparateur de polarisation CSPT et situé à distance égale des deux sources SB, SR à l'intersection de l'axe de projection 8 avec le premier axe optique 5BR. Le cube miroir CM est disposé sur l'axe de projection 8 à l'opposé de la lentille de projection LP par rapport au premier axe optique 5BR.

En suivant le premier axe optique 5BR et en allant de la source bleue SB vers la source rouge SR, on trouve successivement :
- la lentille collimatrice LCB pour lumière bleue ;
- le premier miroir M1R pour la lumière rouge ;
- le cube triple séparateur CSPT ;
- le premier miroir M1B pour la lumière bleue ;
- la lentille de collimation LCR pour la lumière rouge ;
- la source lumineuse rouge SR.

Le cube miroir CM et le premier miroir M1B pour la lumière bleue sont sur le troisième axe optique 13B où seuls se propagent en directions opposées des faisceaux de lumière bleue, et sur lequel doit être situé le modulateur spatial de lumière ou écran LCD 12B (non représenté). Comme dans les exemples précédents chaque couleur comporte son écran LCD 12 disposé sur le troisième axe optique 13B, 13R, 13V de l'ensemble de modulation correspondant. Mais pour plus de clarté de la figure 5, les écrans LCD 12 ou valves optiques ne sont pas représentés. Il doit être précisé que ces écrans LCD 12 sont dans un plan perpendiculaire au troisième axe optique 13 qui les porte et sont dans un même plan (non représenté) que celui qui contient la surface séparatrice SP correspondante (contenue dans le cube CSPT).

Le cube miroir CM et le premier miroir M1R pour la lumière rouge sont sur le troisième axe optique 13R.

La source de lumière verte SV est située sur son premier axe optique 5V, qui est perpendiculaire à la fois au premier axe optique 5BR (couleurs bleue et rouge) et à l'axe de projection 8, et qui passe par l'intersection de ces deux axes.

Une lentille collimatrice LCV pour la lumière verte est située sur l'axe optique SV, entre la source verte SV et le cube triple séparateur CSPT. Un premier miroir M1V pour la lumière verte est situé sur le premier axe optique 5V de lumière verte ; et ce miroir détermine avec le cube miroir CM un troisième axe optique 13V pour la lumière verte.

Dans la version de projecteur multicouleur montrée aux figures 5 et 6, les sources lumineuses SB, SR et SV sont monochromatiques. Ce sont soit des sources primaires c'est-à-dire produisant elles-mêmes la lumière ; soit des sources secondaires et dans ce cas la lumière peut être une lumière blanche produite par une source primaire blanche, unique, associée à un élément qui permet de réaliser la séparation des trois couleurs primaires : rouge, vert, bleu. Une telle structure est en elle-même classique. On trouve en effet couramment dans le commerce des cubes (ou prismes) séparateurs de couleurs dits cubes dichroïques et il suffit de transmettre (à l'aide de fibres optiques par exemple) chaque faisceau coloré jusqu'au point où sont situés les sources SB, SR, SV (montrées aux figures 5,6) de couleur correspondante.

Dans une structure de projecteur couleur telle que celle montrée aux figures 5 et 6, d'une part les surfaces séparatrices de polarisation SPB, SPR, SPV et les surfaces qui forment les miroirs M1B, M2B, M1R, M2R, M1V, M2V doivent agir sélectivement ; d'autre part les surfaces séparatrices SPB, SPR, SPV de polarisation d'un côté, et les seconds miroirs M2B, M2R, M2V d'un autre côté, doivent être imbriquées, dans des plans qui se coupent.

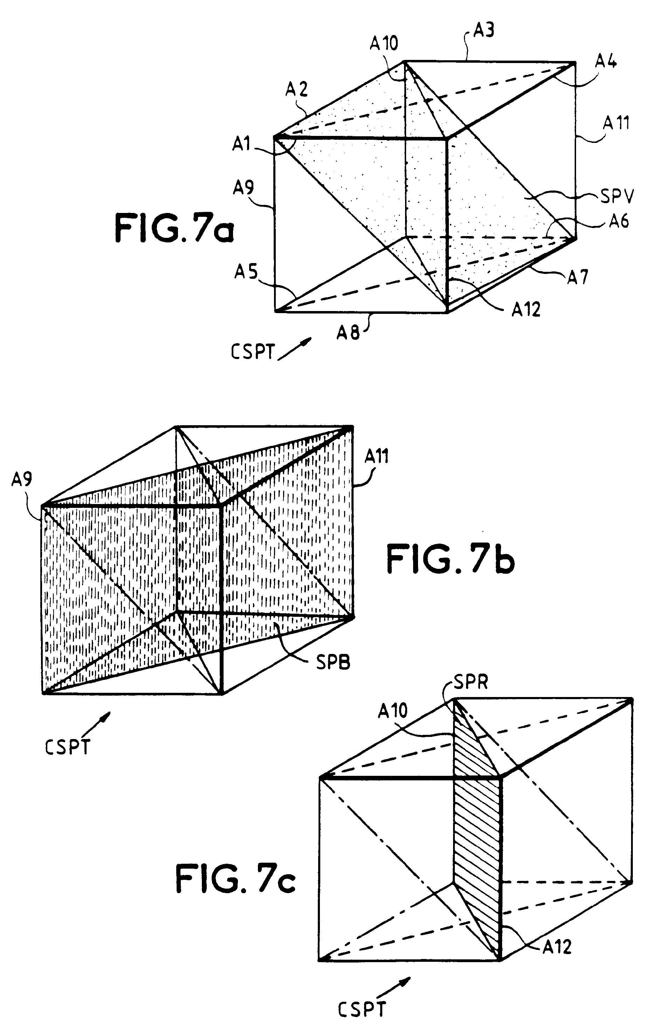

Les figures 7a, 7b, 7c sont des vues en perspective qui illustrent l'imbrication de ces surfaces, en prenant par exemple un cas où les surfaces séparatrices de polarisation SPB, SPR, SPV, sont contenues dans un même cube CSPT.

La figure 7a montre le cube CSPT dont les 12 arêtes sont repérées A1 à A12. L'une des trois surfaces séparatrices de polarisation, par exemple la surface séparatrice SPV affectée à la lumière verte, est formée dans le plan contenant les deux arêtes opposées A2 et A7.

La figure 7b montre le cube CSPT et montre plus particulièrement une autre surface séparatrice de polarisation formée dans le plan contenant les deux arêtes opposées A9 et A11 ; en référence à l'exemple de la figure 6, si la surface séparatrice de la figure 7a est la surface SPV, la surface montrée à la figure 7b est la surface séparatrice SPB affectée à la lumière bleue.

La figure 7c montre le cube CSPT et représente la surface séparatrice SPR affectée au rouge, surface séparatrice qui est formée dans le plan contenant les deux arêtes opposées A10 et A12.

Les figures 7a à 7c montrent que les surface séparatrices se coupent et l'exemple de ces figures peut s'appliquer aussi au cas des surfaces réfléchissantes sélectives qui doivent constituer les seconds miroirs M2B, M2R et M2V dans la version montrée aux figures 5 et 6.

La réalisation de telles surfaces imbriquées peut poser des problèmes dans le cadre d'une réalisation industrielle, et ceci particulièrement si l'on cherche à réaliser ces surfaces dans un cube transparent en vue notamment d'éviter les problèmes classiques de variations d'indices de réfraction.

Si l'on cherche à réaliser ces surfaces dans un cube transparent soit pour former un cube CM contenant les trois surfaces formant les seconds miroirs M2B, M2R, M2V, soit pour former le cube triple séparateur CSPT, de tels cubes peuvent être constitués par un assemblage de pièces élémentaires, transparentes à la lumière, en verre ou en plastique par exemple.

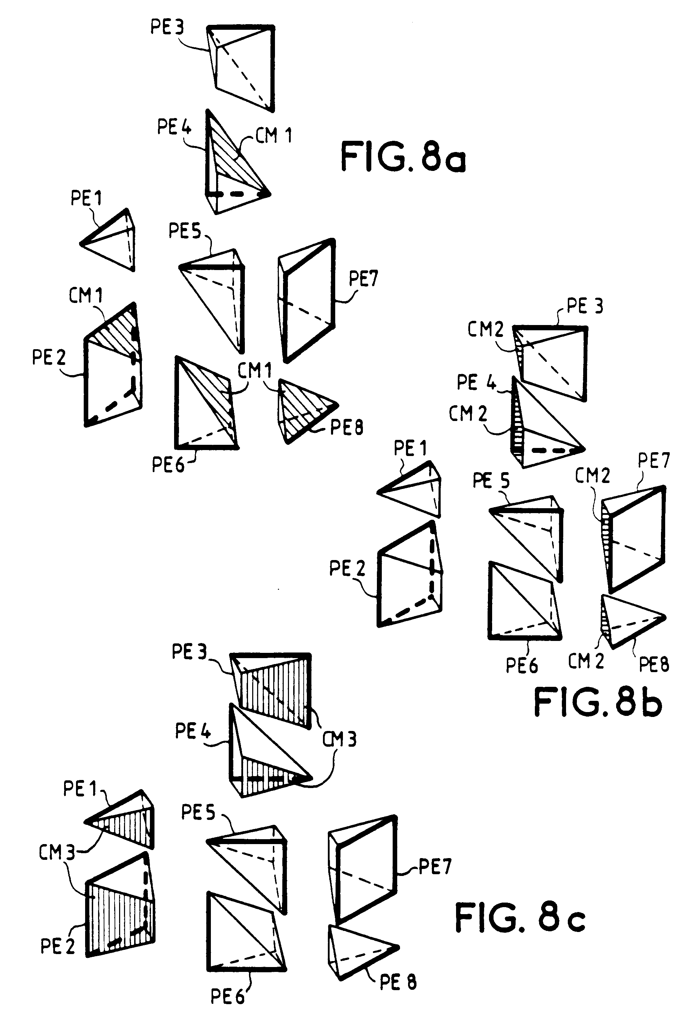

Les figures 8a, 8b, 8c montrent un même ensemble de telles pièces élémentaires PE1 à PE8 dont l'assemblage conduit à obtenir un cube tel que le cube CSPT montré aux figures 7a à 7c, et pouvant contenir trois surfaces séparatrices de polarisation. Mais il doit être entendu que l'exemple décrit en référence aux figures 8a à 8c peut s'appliquer aussi à la réalisation d'un cube CM contenant trois miroirs sélectifs.

Les pièces élémentaires PE1 à PE8 ont une forme pyramidales et comportent une ou deux de leurs faces traitées, c'est-à-dire recouvertes d'empilements de couches minces. Ces pièces élémentaires forment un cube quand elles sont réunies.

Les pièces élémentaires PE1 à PE8 pyramidales correspondent à des pièces qui seraient obtenues en coupant un cube, suivant les trois plans contenant chacun une surface séparatrice SPV, SPB, SPR montrée aux figures 7a, 7b, 7c. On obtient alors les huit pièces élémentaires PE1 à PE8 ; on observe que des pièces sont identiques deux à deux : la première et la huitième pièces PE1, PE8 ; la seconde et la septième pièce PE2, PE7 ; la quatrième et la cinquième pièces PE4, PE5 ; la troisième et la sixième pièces PE3, PE6. Bien entendu, des pièces pyramidales de formes différentes de celles des pièces Pe1 à Pe8 montrées aux figures 8a à 8c peuvent être obtenues aussi en coupant un cube suivant seulement deux plans contenant chacun soit une surface séparatrice SPR, SPB, soit un second miroir M2R, M2B, suivant l'exemple représenté à la figure 5.

Les figures 8a et 8c illustrent par des hachures des traitements ou empilements de couches minces diélectriques réalisés sur une ou deux faces de certaines des pièces élémentaires, en vue de constituer des miroirs ou des séparateurs de polarisation, agissant sélectivement.

Ainsi, la figure 8a illustre par des hachures inclinées un premier type d'empilement de couches minces diélectriques CM1 (agissant par exemple pour la lumière verte) réalisé sur une face des pièces élémentaires PE2, PE4, PE6 et PE8.

La figure 8b montre par des hachures horizontales un second empilement de couches minces diélectriques CM2 (agissant par exemple pour la lumière rouge) réalisé sur une face des quatre pièces PE3, PE4, P7 et PE8.

La figure 8c montre par des hachures verticales un troisième type d'empilement CM3 de couches minces diélectriques (agissant par la lumière bleue) réalisé sur une face des quatre pièces PE1, PE2, PE3 et PE4.

On pourrait obtenir, au maximum, 6 surfaces bissectrices dans un cube. De telles imbrications de surfaces ayant des propriétés sélectives sont réalisables grâce à l'utilisation de la technologie des couches minces diélectriques par exemple.

En ce qui concerne les seconds miroirs (M2) imbriqués entre eux, ils peuvent être obtenus par la même technique que le cube à trois surfaces séparatrices de polarisations (assemblage de pyramides élémentaires), en utilisant la même technologie de dépôt en couche minces de matériaux diélectriques, avec la différence que les fonctions obtenues (miroir) sont sélectives en longueur d'onde et insensibles aux polarisations.

## Revendications

1. Projecteur d'images comprenant au moins deux ensembles de modulation de la lumière (EMR, EMB, EMV), soit une source de lumière commune à tous les ensembles de modulation de la lumière, soit des sources de lumière (SR, SB, SV) chacune associée à un desdits ensemble de modulation de la lumière, et un objectif de projection (LP), chaque ensemble de modulation de la lumière comportant un modulateur spatial de la lumière (12R; 12B; 12V) agissant sélectivement sur la polarisation de la lumière qu'il reçoit, un séparateur de polarisation (SPR; SPB; SPV) séparant la lumière provenant de la source commune de lumière ou de la source de lumière associée à l'ensemble de modulation respective en fonction de sa polarisation en un premier et un second faisceaux polarisés ayant des directions de propagation différentes et des polarisations différentes et complémentaires, et des moyens (M1R; M1B; M1V) pour superposer les premier et second faisceaux polarisés sur un même axe optique (13R; 13B; 13V) avec des directions de propagation opposées, le modulateur spatial de lumière étant disposé sur ledit axe optique afin de moduler les premier et second faisceaux polarisés lesquels émergent du modulateur spatial et forment respectivement un premier et un second faisceaux modulés ayant des polarisations complémentaires, les deux faisceaux modulés repassant par le même séparateur de polarisation par lequel ils sont superposés sur un même axe (8; 5B; 5R; 5V) et avec une même direction et orientés vers l'objectif de projection (LP) et/ou vers ladite source de lumière en fonction de leur modulation par le modulateur spatial de lumière, caractérisé en ce que les séparateurs de polarisation (SPR, SPB, SPV) sont sélectifs en longueur d'onde pour agir sélectivement sur une couleur et forment des surfaces imbriquées et croisées.

2. Projecteur d'image selon la revendication 1, caractérisé en ce que les séparateurs de polarisation sont du type formé par un empilement de couches minces diélectriques.

3. Projecteur d'images selon l'une des revendications précédentes, caractérisé en ce que dans chaque ensemble de modulation (EMR; EMB; EMV) le séparateur de polarisation (SPR; SPB; SPV) et le modulateur spatial de lumière (12R; 12B; 12V) sont situés dans un même plan.

4. Projecteur d'images selon l'une des revendications précédentes, caractérisé en ce que chaque ensemble de modulation (EMR; EMB; EMV) comporte un premier et un second miroirs (M1R, M2R; M1B, M2B) situés sur un même axe optique (13R; 13B) que le modulateur spatial de lumière et de part et d'autre de ce dernier, chaque miroir réfléchissant d'une part vers le modulateur spatial un faisceau polarisé ayant une direction de polarisation donné (P1), et d'autre part vers le séparateur de polarisation (SPR, SPB, SPV) un faisceau modulé ayant une direction de polarisation complémentaire de la première.

5. Projecteur d'images selon la revendication 4, caractérisé en ce que dans chaque ensemble de modulation (EMR; EMB; EMV) le séparateur de polarisation (SPR; SPB; SPV) et les deux miroirs définissent un chemin optique qui est commun aux faisceaux des deux polarisations complémentaires.

6. Projecteur d'images selon la revendication 5, caractérisé en ce que le chemin optique a une forme triangulaire, et en ce que les faisceaux repassent par le séparateur de polarisation (SPR, SPB, SPV) pour être superposés sur un premier ou un second axe (8B; 5B) et avec une même direction.

7. Projecteur selon l'une des revendications précédentes, caractérisé en ce que dans chaque ensemble de modulation (EMR; EMB; EMV) le séparateur de polarisation (SPR; SPB; SPV) a une surface largement inférieure à celle du modulateur spatial.

8. Projecteur selon l'une des revendications précédentes, caractérisé en ce que le séparateur de polarisation (38) est du type agissant pour les polarisations linéaires.

9. Projecteur selon l'une des revendications précédentes, caractérisé en ce qu'il comporte au moins trois ensembles de modulation (EMB, EMR, EMV) affectés chacun à traiter une couleur différente (R, V, B) et ayant au moins un axe optique (8) en commun.

10. Projecteur selon la revendication 9, caractérisé en ce que deux des ensembles de modulation (EMB, EMR, EMV) comportent deux axes optiques (5, 8) en commun.

11. Projecteur selon la revendication 9, caractérisé en ce que l'axe optique (8) commun est un axe de projection portant l'objectif de projection (LP) commun aux trois couleurs (R, V, B).

12. Projecteur selon la revendication 10, caractérisé en ce que les trois séparateurs de polarisation (SPR, SPB, SPV), les trois premiers miroirs et les trois seconds miroirs sont sélectifs en longueur d'onde.

13. Projecteur selon la revendication 12, caractérisé en ce que les trois séparateurs de polarisations (SPR, SPB, SPV) comportent chacun une surface séparatrice, les séparateurs de polarisation étant du type formé par un empilement de couches minces diélectriques, et les surfaces séparatrices étant imbriquées les unes dans les autres.

14. Projecteur selon la revendication 13, caractérisé en ce que les trois séparateurs de polarisation (SPR, SPB, SPV) sont constitués dans un même cube transparent (CSPT) lui-même constitué par l'assemblage de pyramides élémentaires (PE1 - PE8) semblable à des pièces qui seraient obtenues par découpage du cube transparent suivant les différents plans correspondant chacun à une surface séparatrice.

15. Projecteur selon la revendication 14, caractérisé en ce chaque surface séparatrice de polarisation est formée par des surfaces partielles, chacune constituée sur une face d'une pyramide élémentaire (PE1 - PE8), face sur laquelle est réalisé un empilement de couches minces diélectriques actif pour une gamme de longueur d'onde donnée.

16. Projecteur selon la revendication 12, caractérisé en ce que les trois seconds miroirs sont chacun du type formé par un empilement de couches minces diélectriques et sont imbriqués les uns dans les autres.

17. Projecteur selon la revendication 16, caractérisé en ce que les seconds miroirs sont constitués dans un même cube transparent (CM), lui-même constitué par l'assemblage de pyramides (PE1 - PE8) élémentaires semblables à des pièces obtenues par découpage du cube transparent (CM) suivant les différents plans correspondant chacun à un second miroir.

18. Projecteur selon la revendication 17, caractérisé en ce que chaque second miroir est formé par des surfaces partielles chacune constituée sur une face d'une pyramide élémentaire (PE1 - PE8), face laquelle est réalisé un empilement de couches minces diélectriques actif pour une gamme de longueur d'onde donnée.

19. Projecteur selon l'une des revendications précédentes, caractérisé en ce qu'il comporte au moins trois ensembles de modulation (EMR, EMB, EMV) affectés chacun à une couleur différente, une unique source de lumière délivrant un faisceau de lumière blanche, un premier cube dichroïque séparant la lumière blanche en trois couleurs différentes, chaque lumière d'une couleur donnée étant réfléchie vers le séparateur de polarisation (SPR, SPB, SPV) de l'ensemble de modulation correspondant, et en ce qu'un second cube dichroïque superpose les lumières revenant de chacun des ensembles de modulation (EMR, EMB, EMV) afin de constituer un faisceau de lumière polychromatique se propageant en direction de l'objectif de projection (LP).

20. Projecteur selon la revendication 19, caractérisé en ce que les ensembles de modulation (EMR, EMB, EMV) sont constitués chacun par deux blocs transparents séparés par un plan contenant un séparateur de polarisation (SP) et un modulateur spatial (12B, 12R, 12V), et en ce que les deux cubes dichroïques sont superposés et entourés sur 3 faces par les trois ensembles de modulation (EM1, EM2, EM3), chaque ensemble de modulation comportant un miroir d'éclairement situé en vis-à-vis d'une face du premier cube dichroïque.

## Patentansprüche

1. Bildprojektor mit wenigstens zwei Lichtmodulationseinheiten (EMR, EMB, EMV), entweder einer allen Lichtmodulationseinheiten gemeinsamen Lichtquelle oder Lichtquellen (SR, SB, SV), die jeweils einer der Lichtmodulationseinheiten zugeordnet sind, und einem Projektionsobjektiv (LP), wobei jede Lichtmodulationseinheit einen Raumlichtmodulator (12R; 12B; 12V), der selektiv auf die Polarisation des Lichtes einwirkt, das er empfängt, einen Polarisationsseparator (SPR; SPB; SPV), der das Licht von der gemeinsamen Lichtquelle oder der der betreffenden Modulationseinheit zugeordneten Lichtquelle in Abhängigkeit von seiner Polarisation in ein erstes polarisiertes Strahlenbündel und ein zweites polarisiertes Strahlenbündel unterschiedlicher Ausbreitungsrichtung und unterschiedlicher sowie komplementärer Polarisation trennt, und Mittel (M1R; M1B; M1V) enthält, um das erste polarisierte Strahlenbündel und das zweite polarisierte Strahlenbündel auf einer gleichen optischen Achse (13R; 13B; 13V) mit entgegengesetzten Ausbreitungsrichtungen zu überlagern, wobei der Raumlichtmodulator auf der optischen Achse angeordnet ist, um das erste polarisierte Strahlenbündel und das zweite polarisierte Strahlenbündel zu modulieren, die aus dem Raummodulator austreten und ein erstes bzw. ein zweites moduliertes Strahlenbündel komplementärer Polarisation bilden, und wobei die beiden modulierten Strahlenbündel wieder durch den gleichen Polarisationsseparator hindurchtreten, durch den sie auf einer gleichen Achse (8; 5B; 5R; 5V) und mit einer gleichen Richtung überlagert und je nach deren Modulation durch den Raumlichtmodulator auf das Projektionsobjektiv (LP) und/oder auf die Lichtquelle gerichtet werden, dadurch gekennzeichnet, daß die Polarisationsseparatoren (SPR, SPB, SPV) wellenlängenselektiv sind, um selektiv auf eine Farbe einzuwirken und verschachtelte sowie gekreuzte Flächen zu bilden.

2. Bildprojektor nach Anspruch 1, dadurch gekennzeichnet, daß die Polarisationsseparatoren von dem Typ sind, der durch einen Stapel aus dünnen dielektrischen Schichten gebildet ist.

3. Bildprojektor nach einem der vorhergehenden Ansprüche, dadurch gekennzeichnet, daß in jeder Modulationseinheit (EMR; EMB; EMV) der Polarisationsseparator (SPR; SPB; SPV) und der Raumlichtmodulator (12R; 12B; 12V) in einer gleichen Ebene angeordnet sind.

4. Bildprojektor nach einem der vorhergehenden Ansprüche, dadurch gekennzeichnet, daß jede Modulationseinheit (EMR; EMB; EMV) einen ersten und einen zweiten Spiegel (M1R, M2R; M1B, M2B) enthält, die auf einer gleichen optischen Achse (13R; 13B) wie der Raumlichtmodulator beiderseits dieses letzteren angeordnet sind, wobei jeder Spiegel einerseits ein polarisiertes Strahlenbündel mit einer gegebenen Polarisationsrichtung (P1) zu dem Raummodulator und andererseits ein moduliertes Strahlenbündel mit einer zur ersten komplementären Polarisationsrichtung zu dem Polarisationsseparator (SPR, SPB, SPV) reflektiert.

5. Bildprojektor nach Anspruch 4, dadurch gekennzeichnet, daß in jeder Modulationseinheit (EMR; EMB; EMV) der Polarisationsseparator (SPR; SPB; SPV) und die beiden Spiegel einen Lichtpfad definieren, der den Strahlenbündeln der beiden komplementären Polarisationen gemeinsam ist.

6. Bildprojektor nach Anspruch 5, dadurch gekennzeichnet, daß der Lichtpfad eine dreieckige Form besitzt und daß die Strahlenbündel wieder durch den Polarisationsseparator (SPR, SPB, SPV) hindurchtreten, um auf einer ersten oder einer zweiten Achse (8B; 5B) und mit einer gleichen Richtung überlagert zu werden.

7. Projektor nach einem der vorhergehenden Ansprüche, dadurch gekennzeichnet, daß in jeder Modulationseinheit (EMR; EMB; EMV) der polarisationsseparator (SPR; SPB; SPV) eine Fläche besitzt, die wesentlich kleiner als die des Raummodulators ist.

8. Projektor nach einem der vorhergehenden Ansprüche, dadurch gekennzeichnet, daß der Polarisationsseparator (38) von dem Typ ist, der für die linearen Polarisationen wirkt.

9. Projektor nach einem der vorhergehenden Ansprüche, dadurch gekennzeichnet, daß er wenigstens drei Modulationseinheiten (EMB, EMR, EMV) enthält, die jeweils dafür bestimmt sind, eine unterschiedliche Farbe (R, V, B) zu verarbeiten und die eine gemeinsame optische Achse (8) besitzen.

10. Projektor nach Anspruch 9, dadurch gekennzeichnet, daß zwei der Modulationseinheiten (EMB, EMR, EMV) zwei gemeinsame optische Achsen (5, 8) enthalten.

11. Projektor nach Anspruch 9, dadurch gekennzeichnet, daß die gemeinsame optische Achse (8) eine Projektionsachse ist, die das den drei Farben (R, V, B) gemeinsame Projektionsobjektiv (LP) enthält.

12. Projektor nach Anspruch 10, dadurch gekennzeichnet, daß die drei Polarisationsseparatoren (SPR, SPB, SPV), die drei ersten Spiegel und die drei zweiten Spiegel wellenlängenselektiv sind.

13. Projektor nach Anspruch 12, dadurch gekennzeichnet, daß die drei Polarisationsseparatoren (SPR, SPB, SPV) jeweils eine Trennfläche enthalten, wobei die Polarisationsseparatoren von dem Typ sind, der durch einen Stapel aus dünnen dielektrischen Schichten gebildet ist, und wobei die Trennflächen verschachtelt sind.

14. Projektor nach Anspruch 13, dadurch gekennzeichnet, daß die drei Polarisationsseparatoren (SPR, SPB, SPV) in einem gleichen, transparenten Kubus (CSPT) gebildet sind, der selbst durch die Vereinigung von Elementarpyramiden (PE1-PE8) gebildet ist, die Stücken gleichen, die durch Zerschneiden des transparenten Kubus entlang unterschiedlicher, jeweils einer Trennfläche entsprechender Ebenen erhalten werden.

15. Projektor nach Anspruch 14, dadurch gekennzeichnet, daß jede Polarisationstrennfläche durch Teilflächen gebildet ist, die jeweils auf einer Seite einer Elementarpyramide (PE1-PE8) gebildet sind, auf welcher Seite ein Stapel von dünnen, dielektrischen aktiven Schichten für einen gegebenen Wellenlängenbereich verwirklicht ist.

16. Projektor nach Anspruch 12, dadurch gekennzeichnet, daß die drei zweiten Spiegel jeweils von dem Typ sind, der durch einen Stapel von dünnen dielektrischen Schichten gebildet ist, und verschachtelt sind.

17. Projektor nach Anspruch 16, dadurch gekennzeichnet, daß die zweiten Spiegel in einem gleichen transparenten Kubus (CM) gebildet sind, der selbst durch die Vereinigung von Elementarpyramiden (PE1-PE8) gebildet ist, die Stücken gleichen, die durch Zerschneiden des transparenten Kubus (CM) entlang der unterschiedlichen, jeweils einem zweiten Spiegel entsprechenden Ebenen erhalten werden.

18. Projektor nach Anspruch 17, dadurch gekennzeichnet, daß jeder Spiegel durch Teilflächen gebildet ist, die jeweils auf einer Seite einer Elementarpyramide (PE1-PE8) gebildet sind, auf welcher Seite ein Stapel von dünnen, dielektrischen aktiven Schichten für einen vorgegebenen Wellenlängenbereich verwirklicht ist.

19. Projektor nach einem der vorhergehenden Ansprüche, dadurch gekennzeichnet, daß er wenigstens drei Modulationseinheiten (EMR, EMB, EMV) enthält, die jeweils für eine unterschiedliche Farbe bestimmt sind, wobei eine einzige Lichtquelle ein Weißlichtstrahlenbündel liefert, ein erster dichroitischer Kubus das Weißlicht in drei unterschiedliche Farben trennt und jedes Licht einer gegebenen Farbe zu dem Polarisationsseparator (SPR, SPB, SPV) der entsprechenden Modulationseinheit reflektiert wird, und daß ein zweiter dichroitischer Kubus die von jeder der Modulationseinheiten (EMR, EMB, EMV) zurückkommenden Lichtanteile überlagert, um ein polychromatisches Strahlenbündel zu bilden, das sich in Richtung des Projektionsobjektivs (LP) ausbreitet.

20. Projektor nach Anspruch 19, dadurch gekennzeichnet, daß die Modulationseinheiten (EMR, EMB, EMV) jeweils durch zwei transparente Blöcke gebildet sind, die durch eine Ebene getrennt sind, die einen Polarisationsseparator (SP) und einen Raummodulator (12B, 12R, 12V) enthält, und daß die beiden dichroitischen Kuben übereinanderliegen und auf drei Seiten von den drei Modulationseinheiten (EM1, EM2, EM3) umgeben sind, wobei jede Modulationseinheit einen Beleuchtungsspiegel enthält, der gegenüber einer Seite des ersten dichroitischen Kubus angeordnet ist.

## Claims

1. Image projector comprising at least two light modulation assemblies (EMR, EMB, EMV), either one light source common to all the light modulation assemblies or light sources (SR, SB, SV), each associated with one of the said light modulation assemblies, and a projection objective (LP), each light modulation assembly including a spatial light modulator (12R; 12B; 12V) acting selectively on the polarization of the light which it receives, a polarization separator (SPR; SPB; SBV) separating the light originating from the common light source or from the light source associated with the respective modulation assembly on the basis of its polarization into a first and a second polarized beam having different propagation directions and different and complementary polarizations, and means (M1R; M1B; M1V) for superimposing the first and second polarized beams on the same optical axis (13R; 13B; 13V) with opposed propagation directions, the spatial light modulator being arranged on the said optical axis so as to modulate the first and second polarized beams which emerge from the spatial modulator and form a first and a second modulated beam respectively having complementary polarization, the two modulated beams again passing through the same polarization separator by which they are superimposed on the same axis (8; 5B; 5R; 5V) and with the same direction and oriented towards the projection objective (LP) and/or towards the said light source on the basis of their modulation by the spatial light modulator, characterized in that the polarization separators (SPR, SPB, SPV) are wavelength-selective in order to act selectively on one colour, and form imbricated and intersecting surfaces.

2. Image projector according to Claim 1, characterized in that the polarization separators are of the type formed by a stack of dielectric thin films.

3. Image projector according to one of the preceding claims, characterized in that, in each modulation assembly (EMR; EMB; EMV) the polarization separator (SPR; SPB; SPV) and the spatial light modulator (12R; 12B; 12V) are situated in the same plane.

4. Image projector according to one of the preceding claims, characterized in that each modulation assembly (EMR; EMB; EMV) includes a first and a second mirror (M1R, M2R; M1B, M2B) situated on the same optical axis (13R; 13B) as the spatial light modulator and on either side of the latter, each mirror reflecting, on the one hand, towards the spatial modulator a polarized beam having a given polarization direction (P1), and on the other hand, towards the polarization separator (SPR, SPB, SPV) a modulated beam having a polarization direction complementary to the first one.

5. Image projector according to Claim 4, characterized in that, in each modulation assembly (EMR; EMB; EMV) the polarization separator (SPR; SPB; SPV) and the two mirrors define an optical path which is common to the beams of the two complementary polarizations.

6. Image projector according to Claim 5, characterized in that the optical path has a triangular shape, and in that the beams again pass through the polarization separator (SPR, SPB, SPV) in order to be superimposed on a first or a second axis (8B; 5B) and with the same direction.

7. Projector according to one of the preceding claims, characterized in that, in each modulation assembly (EMR; EMB; EMV), the polarization separator (SPR; SPB; SPV) has a surface area which is substantially less than that of the spatial modulator.

8. Projector according to one of the preceding claims, characterized in that the polarization separator (38) is of the type acting for linear polarizations.

9. Projector according to one of the preceding claims, characterized in that it includes at least three modulation assemblies (EMB, EMR, EMV) each assigned to processing a different colour (R, G, B) and having at least one optical axis (8) in common.

10. Projector according to Claim 9, characterized in that two of the modulation assemblies (EMB, EMR, EMV) include two optical axes (5, 8) in common.

11. Projector according to Claim 9, characterized in that the common optical axis (8) is a projection axis carrying the projection objective (LP) common to the three colours (R, G, B).

12. Projector according to Claim 10, characterized in that the three polarization separators (SPR, SPB, SPV), the three first mirrors and the three second mirrors are wavelength-selective.

13. Projector according to Claim 12, characterized in that the three polarization separators (SPR, SPB, SPV) each include a separating surface, the polarization separators being of the type formed by a stack of thin dielectric films, and the separating surfaces being imbricated into one another.

14. Projector according to Claim 13, characterized in that the three polarization separators (SPR, SPB, SPV) are formed in a single transparent cube (CSPT), which itself consists of an assembly of elementary pyramids (PE1 - PE8) similar to pieces which would be obtained by cutting up the transparent cube along the various planes each corresponding to a separating surface.

15. Projector according to Claim 14, characterized in that each polarization-separating surface is formed by partial surfaces, each consisting of one face of an elementary pyramid (PE1 - PE8), on which face a stack of dielectric thin films are produced, which is active for a given wavelength range.

16. Projector according to Claim 12, characterized in that the three second mirrors are each of the type formed by a stack of dielectric thin films, and are imbricated into one another.

17. Projector according to Claim 16, characterized in that the second mirrors are formed in a single transparent cube (CM), which itself consists of the assembly of elementary pyramids (PE1 - PE8) similar to pieces obtained by cutting up the transparent cube (CM) along the various planes each corresponding to a second mirror.

18. Projector according to Claim 17, characterized in that each second mirror is formed by partial surfaces each consisting of one face of an elementary pyramid (PE1 - PE8), on which face a stack of dielectric thin films is produced which is active for a given wavelength range.

19. Projector according to one of the preceding claims, characterized in that it includes at least three modulation assemblies (EMR, EMB, EMV) each assigned to a different colour, a single light source delivering a beam of white light, a first dichroic cube separating the white light into three different colours, each light of a given colour being reflected towards the polarization separator (SPR, SPB, SPV) of the corresponding modulation assembly, and in that a second dichroic cube superimposes the light coming back from each of the modulation assemblies (EMR, EMB, EMV) so as to constitute a beam of polychromatic light propagating towards the projection objective (LP).

20. Projector according to Claim 19, characterized in that the modulation assemblies (EMR, EMB, EMV) each consist of two transparent blocks separated by a plane containing a polarization separator (SP) and a spatial modulator (12B, 12R, 12V), and in that the two dichroic cubes are superimposed and surrounded on 3 faces by the three modulation assemblies (EMl, EM2, EM3), each modulation assembly including an illumination mirror situated facing one face of the first dichroic cube.
